Europäisches Patentamt

European Patent Office

Office européen des brevets

(11) Publication number: **0 080 238**
**A1**

# EUROPEAN PATENT APPLICATION

(21) Application number: **82201466.8**

(22) Date of filing: **17.11.82**

(51) Int. Cl.³: **A 01 D 17/10, B 07 B 1/10**

(30) Priority: **19.11.81 NL 8105243**

(71) Applicant: **WEVEA B.V., 11 Handelsweg, NL-4879 AJ Etten-Leur (NL)**

(43) Date of publication of application: **01.06.83**
**Bulletin 83/22**

(72) Inventor: **Vogelaar, Leendert Cornelis, Bazuinlaan 52, NL-4876 AG Etten-Leur (NL)**

(74) Representative: **Hoorweg, Petrus Nicolaas et al, OCTROOIBUREAU ARNOLD & SIEDSMA Sweelinckplein 1, NL-2517 GK The Hague (NL)**

(84) Designated Contracting States: **BE DE FR GB NL SE**

(54) **Sieve belt with adjustable mesh size.**

(57) A conveyor belt, for example, for use in agricultural digging machines, said belt mainly comprising two or more parallel, endless, flexible carriers (1, 2) passed around reversing rollers (7, 8) and rod-shaped elements (3, 4) extending between them wherein the flexible carriers (1, 2) are divided into two groups and the rod-shaped elements (3, 4) alternately extend between one and the other group of carriers respectively, whereas the distance between two neighbouring rods (3, 4) can be varied so easily adapting the belt for various products to be dug up.

EP 0 080 238 A1

Sieve belt with adjustable mesh size

----------------------------------------------------------------

The invention relates to a conveyor belt, for example, for use in agricultural digging machines, said belt mainly comprising two or more parallel, endless flexible carriers passed around reversing elements and rod-shaped elements extending between them.

Such a belt is frequently employed in digging machines, in which the dug-up product is conducted away with an amount of earth. The earth and the products smaller than a given size can drop down between the rod-shaped elements of the belt so that the desired product can be stored for further processing.

The invention has for its object to improve the belt of the kind set forth in a manner such that the mesh size, that is to say, the distance between two neighbouring rods can be varied so that the user can employ the belt for various purposes or various products to be dug up.

The belt embodying the invention is distinguished in that the flexible carriers are divided into two groups and the rod-shaped elements alternately extend between one and the other group of carriers respectively.

This group-wise arrangement of the rods permits of moving adjacent rods towards or away from one another so that smaller or larger meshes respectively are formed.

In order to maintain the unity of the belt it is preferred to equip each group with one or more intermediate carriers extending beneath the rod-shaped elements. Thus the groups each comprising rod-shaped elements and carriers are interwoven.

In order to ensure a slip-free drive and an accurate adjustment the carriers have recesses regularly disposed side by side in their sides remote from the rods.

The invention furthermore relates to a conveyor comprising a belt of the kind set forth in the preamble, said conveyor being provided with reversing elements formed by rollers, the rollers of one group being angularly adjustable with respect to the other group.

The invention will be described more fully with reference to the drawing showing one embodiment.

The drawing shows in:

Fig. 1 a plan view of a belt embodying the invention,

Fig. 2 a perspective view of part of a conveyor provided with a velt as shown in fig. 1.

The belt illustrated in the figures mainly comprises a plurality of carriers 1, 2 extending parallel to one another and being formed, for example, by continuous rubber strips of given lengths. Between the carriers 1 a plurality of rod-shaped elements 3 exend in transverse direction; this also applies to the elements 4 of the carriers 2. Thus each time two groups of carriers 1 with transverse elements 3 and carriers 2 with transverse elements 4 are obtained.

Thanks to the arrangement of two groups a shift of the transverse elements 3 with respect to the elements 4 can be performed so that the mesh size $a$ can be changed, for example, into the meash size $b$. This can be carried out by displacing the carriers 1 with respect to the carriers 2.

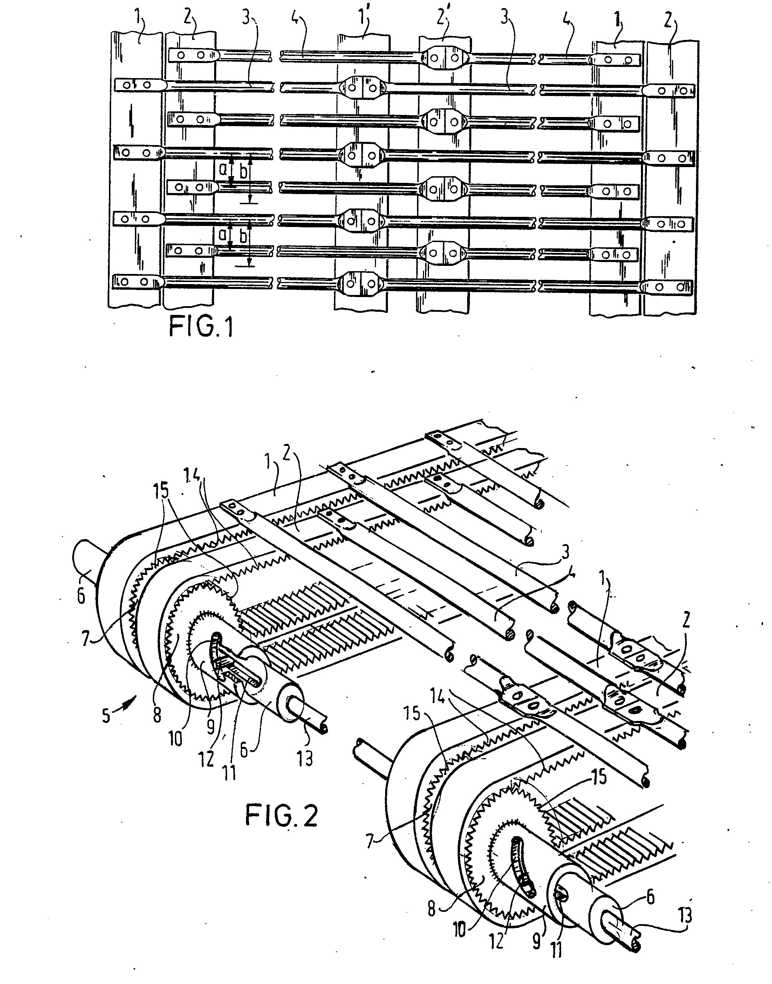

Fig. 2 shows in a perspective view how such a belt can be used in a conveyor. The conveyor is provided with two or more reversing elements 5 each formed by a hollow roller shaft 6 on which toothed wheels 7 are firmly secured. At the side of the toothed wheels 7 the hollow shaft 6 is provided with freely rotatable wheels 8, each having a hub 9. Each wheel 7 carries, for example, the carriers 1 of the first group of the belt, whereas the wheels 8 support the carriers 2.

The carriers 1 can be shifted in place with respect to the carriers 2 by a angular turn of the wheels 7 with respect to the wheels 8. For this purpose each hub 9 has a helical recess 10, whilst an axially extending, straight recess 11 is provided in the hollow shaft 6. Through the two recesses 10, 11 extends a pin 12, which is connected with a pull rod 13 arranged in the hollow shaft 6. By displacing the rod 13 in an axial direction with respect to the hollow shaft 6 the pin 12 will axially reciprocate in the slot 11, said movement resulting in a turn of the hub 9 and, respectively, the wheel 8 with respect to the hollow shaft 6 owing to the helical shape of the slot 11.

The hollow shaft 6 may be driven, but it may, as an alternative, be freely rotatable in which a further reversing element comprises the driving motor not lying within the scope of the present invention.

The ensure a slip-free drive and adjustment each carrier 1, 2 has recesses on the sides remote from the rods 3, 4 in order to obtain a serrated profile 14 co-operating with the toothed outer surfaces of the wheels 7, 8.

It is finally noted that at the side of the outermost carriers 1, 2 the belt of fig. 1 is provided with one pair of intermediate carriers 1', 2' extending beneath the rods 3, 4. In this way the groups are interwoven so that in the dismounted state the belt remains a single unit.

The invention is not limited to the embodiment described above since the number of carriers 1, 2 the shape and the angle of the transverse elements to the associated carriers may be chosen differently.

-1-

0080238

WHAT IS CLAIMED IS:

1. A sieve belt for use, for example, in agricultural digging machines, mainly comprising two or more parallel, endless, flexible carriers to be passed around reversing elements and rod-shaped elements extending between the same characterized in that the flexible carriers are divided into two groups and the rod-shaped elements alternately extend between one and the other group of carriers.

2. A sieve belt as claimed in claim 1, characterized in that each group has one or more intermediate carriers extending beneath the rod-shaped elements.

3. A sieve belt as claimed in claims 1 and 2, characterized in that at least the outermost carriers of a group have recesses regularly disposed side by side on the side remote from the rods.

4. A conveyor comprising at least two reversing elements and a sieve belt arranged around the same as claimed in anyone of the preceding claims characterized in that each reversing element is provided with roller members supporting the carriers of one group and those of the other group respectively, adjusting means being provided for setting the angle between the roller members of one group with respect to those of the other group.

5. A conveyor as claimed in claim 4 characterized in that the roller members of one group can be radially turned with respect to a shaft supporting the roller members of the other group.

6 A conveyor as claimed in claim 5, characterized in that the roller members of one group as well as the hollow shaft each has a setting slot through which is axially displaceable a pin which is centrally displaceable through said hollow shaft.

-----

0080238

FIG.1

FIG.2

European Patent
Office

**EUROPEAN SEARCH REPORT**

Application number

EP 82 20 1466

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | A 01 D 17/10 |
| A | FR-A- 534 909 (ROSS) <br> *Page 1, line 45 to page 2, line 5; figures 1,2* | 1 | B 07 B 1/10 |
| | --- | | |
| A | FR-A- 643 579 (MATET) <br> *Page 1, lines 4-31; figure 1* | 1,4 | |
| | --- | | |
| A | DE-A-2 715 108 (GRIMME) <br> *Page 6, line 21 - page 7, line 18; figure 1* | 1,2 | |
| | --- | | |
| A | FR-A-2 410 949 (GRIMME) <br> *Page 2, lines 6-31; figure 1* | 3 | |
| | ----- | | |

| | TECHNICAL FIELDS SEARCHED (Int. Cl. ³) |
|---|---|
| | A 01 D <br> B 07 B <br> B 65 G |

The present search report has been drawn up for all claims

| Place of search <br> THE HAGUE | Date of completion of the search <br> 23-02-1983 | Examiner <br> MARTIN D.R.V. |
|---|---|---|